Europäisches Patentamt

European Patent Office

Office européen des brevets

(19)

(11) Veröffentlichungsnummer: **0 302 332**
**A2**

(12) **EUROPÄISCHE PATENTANMELDUNG**

(21) Anmeldenummer: 88111910.1

(22) Anmeldetag: 23.07.88

(51) Int. Cl.⁴: **C08G 65/30 , C08G 65/32 ,
C08G 65/20**

(30) Priorität: 01.08.87 DE 3725577

(43) Veröffentlichungstag der Anmeldung:
08.02.89 Patentblatt 89/06

(84) Benannte Vertragsstaaten:
**BE DE ES FR GB IT NL**

(71) Anmelder: **BASF Aktiengesellschaft
Carl-Bosch-Strasse 38
D-6700 Ludwigshafen(DE)**

(72) Erfinder: **Mueller, Herbert, Dr.
Carostrasse 53
D-6710 Frankenthal(DE)**

(54) **Verfahren zur Reinigung von Polyoxibutylenpolyoxialkylenglykolen.**

(57) Verfahren zur Reinigung von Polyoxibutylenpolyoxialkylenglykolen, die durch Copolymerisation von Tetrahydrofuran mit einem 1,2-Alkylenoxid erhalten wurden, bei dem man die Polyoxibutylenpolyoxialkylenglykole bei Temperaturen bis 250° C katalytisch hydriert.

EP 0 302 332 A2

Xerox Copy Centre

## Verfahren zur Reinigung von Polyoxibutylenpolyoxialkylenglykolen

Diese Erfindung betrifft ein Verfahren zur Reinigung von Polyoxibutylenpolyoxialkylenglykolen, die durch kationisch katalysierte Copolymerisation von Tetrahydrofuran und Alkylenoxiden erhalten wurden.

Polyoxibutylenpolyoxialkylenglykole werden durch Copolymerisation von Tetrahydrofuran (THF) und Alkylenoxiden mit Hilfe kationischer Katalysatoren z.B. nach den in der GB-PS 854 958 oder den US-Patentschriften 4 139 567, 4 153 786 und 4 329 445 beschriebenen Verfahren erhalten. Die Copolymeren sind z.B. wichtige Ausgangsstoffe für die Herstellung von Polyurethanen, Polyethern und Polyetherpolyamiden.

Die durch Copolymerisation von THF und Alkylenoxiden an kationischen Katalysatoren erhältlichen Copolymerisate enthalten herstellungsbedingte Verunreinigungen, wie oligomere cyclische Ether, die aus THF- und Alkylenoxid-Einheiten aufgebaut sind. Außerdem enthalten sie geringe Mengen an Dioxan, 2-Methyldioxolan-1,3 und Carbonylverbindungen, Spuren an eingesetztem Alkylenoxid, sowie färbende Verunreinigungen mit unbekannter Struktur und die Säurezahl der Polymeren erhöhende Nebenbestandteile. Letztere wirken sich besonders schädlich auf die Eigenschaften der aus den Copolyetherglykolen hergestellten Endprodukte aus. Ohne daß es bisher möglich war, die Farbe der Endprodukte bestimmten definierten Verunreinigungen in den Copolyetherglykolen zuzuordnen, muß angenommen werden, daß solche Zusammenhänge existieren. Sie können allerdings auch durch mehrere Verunreinigungen, die auch in kombinierter Weise wirksam werden können, verursacht werden. Copolymerisate, die einen Gehalt an cyclischen Ethern von etwa 7 bis 10 Gew.% enthalten, werden für weniger anspruchsvolle Zwecke wie für die Herstellung von Polyurethanen verwendet (U.S. 3 425 999 und 4 071 492). Sie bewirken dabei einen Abfall des mechanischen Niveaus der Polyurethane, der bei solchen Polyurethanen nicht beobachtet wird, die aus THF-Homopolymerisaten ohne einen Gehalt an oligomeren cyclischen Ethern, erhalten werden. Der Abfall der Eigenschaften in den Polyurethanen manifestiert sich dergestalt, als würden sie einen Überschuß an Weichmachern enthalten. Die niedrigmolekularen cyclischen Ether verdampfen langsam bei höherer Temperatur oder werden durch Wasser und organische Lösungsmittel ausgelaugt. Es resultiert ein Gewichtsverlust und eine Veränderung der Dimensionen der Formkörper.

Man hat für die Verminderung des Anteils der oligomeren cyclischen Ether in den Copolymerisaten schon verschiedene Verfahren vorgeschlagen.

So werden die Copolymerisate nach den Angaben der EP-A 6 107 bei höherer Temperatur mit einem aktivierten Montmorillonit behandelt. Bei diesem Verfahren, bei dem die oligomeren cyclischen Ether einer aufwendigen Depolymerisation in Gegenwart der erwünschten Polymerisate unterworfen werden, wird eine quantitative Entfernung der cyclischen Ether nicht erreicht. In der US-PS 4 127 513 wird empfohlen, die Copolymerisation von THF und Alkylenoxid an einem säureaktivierten Montmorillonit vorzunehmen. Nachteilig sind bei diesem Verfahren die hohe Farbzahl der Polymerisate, eine verhältnismäßig geringe Polymerisationsgeschwindigkeit und ein Anteil an oligomeren cyclischen Ethern, der immer noch 5 bis 6 Gew.% beträgt. Führt man die Polymerisation von Alkylenoxiden mit THF unter dem katalytischen Einfluß von aktivierter Bleicherde durch (US-PS 4 228 272), so sollen Produkte mit verbesserter Farbzahl bei erhöhter Polymerisationsgeschwindigkeit erhalten werden. In der Praxis sind die erzielbaren Ergebnisse aber noch nicht befriedigend. Bei weiteren Verfahren werden die cyclischen Ether durch Extraktion der Polymerisate mit Kohlenwasserstoffen, Wasser oder überkritischen Gasen (US-PS 4 500 705, 4 251 654 und 4 306 058) entfernt.

Nach dem in der DE-OS 3 346 136 beschriebenen Verfahren wird die Bildung cyclischer oligomerer Ether bei der Copolymerisation von Alkylenoxiden und THF dadurch unter 2 Gew.% zurückgedrängt, daß man kontinuierlich in einem Reaktor polymerisiert und dem im Kreis geführten Reaktionsgemisch weniger als 30 Gew.% an Frischzulauf aus THF und 1,2-Alkylenoxid zuführt. Von Nachteil ist, daß die entstehenden Polymerisate sehr polydispers sind. Der Heterogenitätsquotient $M_w/M_n$ liegt bei über 4.

Aufgabe dieser Erfindung war es, die in den Copolymerisaten aus THF und Alkylenoxid enthaltenen Nebenprodukte möglichst weitgehend zu entfernen. Dabei sollten auch die in den Copolyetherglykolen in Spuren enthaltenen Alkylenoxiden, die zu einer Klasse von Stoffen gehören, die sich als krebserzeugend erwiesen haben, sicher und vollständig entfernt werden. Da sich eine erhöhte Säurezahl der Copolymerisate in unerwünschter Weise auf deren Reaktivität bei der Umsetzung mit Isocyanaten auswirkt und das für manche Verwendungszwecke erforderte Mindestmaß an Verfärbung erfüllt werden sollte, war es gleichfalls wünschenswert, die auch für die nachteiligen Effekte verantwortlichen Nebenprodukte, deren Natur nicht bekannt sind, so weitgehend wie möglich zu entfernen.

Dieses Ziel wurde dadurch erreicht, daß man die durch Copolymerisation von THF und einem 1,2-Alkylenoxid erhaltenen Polyoxibutylenpolyoxialkylenglykole bei Temperaturen bis 250° C katalytisch hydriert.

Durch das Reinigungsverfahren dieser Erfindung werden die so verschiedenartigen Nebenprodukte in den THF-Alkylenoxid-Copolymerisaten überraschenderweise so weitgehend entfernt, daß es nicht erforderlich ist, auf die erhaltenen Produkte die gebräuchlichen Nachbehandlungsmethoden zum Zwecke der Verminderung des Anteils oligomerer cyclischer Ether oder zur Entfärbung anzuwenden.

Man hat schon andere Polymerisate einer hydrierenden Behandlung unterzogen. So werden nach den Angaben in den japanischen Offenlegungsschriften 78/46906 und 78/46905 Polymerisate aus Epoxiden und daraus durch Umsetzung mit organischen Halogenverbindungen in Gegenwart von Alkalilauge hergestellte Folgeprodukte katalytisch hydriert. Aus der britischen Patentschrift 710 842 ist bekannt, daß man durch anionische Polymerisation entstehende Polyglykolether katalytisch hydrieren kann. Da davon auszugehen ist, daß aus den farblosen Monomeren bei der anionischen Polymerisation Verunreinigungen von anderer Beschaffenheit gebildet werden als sie bei der kationischen Copolymerisation von THF und Alkylenoxid entstehen, konnte von diesen bekannten Verfahren nicht auf das vorteilhafte Ergebnis des Verfahrens dieser Erfindung geschlossen werden. Ebensowenig war von den Angaben in der EP-PS 61 668 über eine farbliche Aufhellung bei der hydrierenden Behandlung von Polytetramethylenetherglykol, das durch Homopolymerisation von THF erhalten wird, auf das erfindungsgemäße Verfahren zu schließen, da bei der erfindungsgemäßen Hydrierung die Farbe der Copolymeren nicht verändert wird. So haben die erfindungsgemäß zu behandelnden Copolymeren vor und nach der Hydrierung eine niedrige Farbzahl von < 5 - 10 APHA.

Nach dem Verfahren der Erfindung werden Polyoxibutylenpolyoxialkylenglykolen gereinigt, die nach an sich bekannten Methoden durch Copolymerisation von THF mit einem 1,2-Alkylenoxid, wie 1,2-Butylenoxid, 2,3-Butylenoxid, Styroloxid, Epichlorhydrin, insbesondere Ethylenoxid und 1,2-Propylenoxid, an einem kationischen Katalysator, wie Fluorsulfonsäure, Borfluoridetherat, Bleicherde oder Zeolith erhalten wurden. Da man bei diesen Copolymerisationen in der Regel rohe Lösungen erhält, die 40 bis 75 Gew.% THF und 60 bis 25 Gew.% Polyoxibutylenpolyoxialkylenglykol enthalten, werden diese Lösungen bevorzugt für die erfindungsgemäße Hydrierung verwendet. Besonders gute Ergebnisse werden erzielt, wenn man für die katalytische Hydrierung solche rohen Lösungen heranzieht, die 45 bis 70 Gew.% Tetrahydrofuran und 30 bis 55 Gew.% Polyoxibutylenpolyoxialkylenglykol enthalten und die man durch diskontinuierliche Copolymerisation von Tetrahydrofuran mit Ethylenoxid and einem Bleicherde- oder Zeolith-Katalysator erhalten hat, wobei das Ethylenoxid - dem Reaktionsgemisch so zugeleitet wurde, daß die Konzentration des Ethylenoxids im Reaktionsmisch während der Polymerisation 2 Gew.% nicht überschritten hat.

Erfindungsgemäß wird bei Temperaturen bis 250° C, vorzugsweise bei 50 bis 250° C, und unter Normaldruck oder erhöhtem Druck, wie bei 1 bis 300 bar hydriert. Da die zusätzliche Druckanwendung gegenüber der drucklosen Arbeitsweise nur verhältnismäßig geringe Vorteile bringt, wird vorzugsweise bei Drücken zwischen 10 und 100 bar Wasserstoff hydriert.

Als Hydrierkatalysatoren kommen z.B. die Metalle der 8. Nebengruppe, insbesondere Nickel, Kobalt, Eisen sowie die Edelmetalle Ruthenium, Palladium oder Platin, ferner Kupfer in Betracht. Die Metalle können in reiner Form z.B. als Raney-Metalle, als Mischungen oder z.B. als reduzierte Oxide angewendet werden. Bewährt haben sich auch Katalysatoren, die die Hydriermetalle auf geeigneten Trägern, wie Aluminiumoxid, Siliciumoxid, Bimsstein, Bentonit oder z.B. Magnesiumsilikat enthalten. Die Katalysatoren, welche unedle Metalle, wie Eisen, Kobalt, Nickel und Kupfer enthalten, werden zweckmäßig vor der Anwendung durch Reduktion mit Wasserstoff in die aktive Form überführt. Bei der Anwendung von Edelmetall-Katalysatoren erübrigt sich in den meisten Fällen eine solche Operation.

Die katalytische Hydrierung wird auf an sich übliche Weise durchgeführt. Man arbeitet in der flüssigen Phase, z.B. nach der Technik der Festbettkatalyse, bei der die Riesel- oder Sumpfmethode zur Anwendung kommt. Mit sehr gutem Erfolg kann aber auch mit suspendiertem Katalysator hydriert werden.

Nach einer besonders vorteilhaften Ausführungsform des Verfahrens dieser Erfindung werden die Polyoxibutylenpolyoxialkylenglykole vor der Hydrierung bei Temperaturen von 20 bis 150° C mit 0,2 bis 5 Gewichtsteilen, vorzugsweise 20 bis 50° C mit 0,2 bis 5, vorzugsweise 0,5 bis 3 Gewichtsteilen Sauerstoff pro 1000 Gewichtsteile Polyoxibutylenpolyoxialkylenglykol behandelt. Zweckmäßigerweise zieht man auch für diese Vorbehandlung die obengenannten THF enthaltenden rohen Lösungen des Copolymerisates heran. Anstelle von Sauerstoff kann man auch Sauerstoff enthaltende Gasgemische, wie Luft verwenden. Durch die Vorbehandlung mit Sauerstoff gelingt es, die für eine erfolgreiche Reinigung erforderliche Hydrierzeit wesentlich abzukürzen.

Durch das erfindungsgemäße Reinigungsverfahren werden die im Copolymerisat enthaltenen, für die weitere Verarbeitung nachteiligen Verunreinigungen entfernt. In manchen Fällen, in denen bei der Copolymerisation gefärbte Produkte anfallen, werden diese auch entfärbt. In den meisten Fällen sind die Copolymerisate, die durch kationische Polymerisation hergestellt werden, bereits farblose Produkte, die aber eine zu hohe Säurezahl besitzen. Durch die erfindungsgemäße Behandlung behalten diese ihre Farblosigkeit, während die Säurezahl auf Null zurückgeht. Dieses wichtige Ergebnis war unvorhersehbar. Gleiches gilt auch für die Veränderung des Copolymerisates im Hinblick auf Weiterverarbeitungseigenschaften sowie die Reduzierung des Gehaltes an cyclischen oligomeren Ethern. Eine wissenschaftlich stichhaltige Erklärung für dieses Verhalten kann nicht gegeben werden.

Es ist auch vorteilhaft, daß die erfindungsgemäße Reinigung der Roh-Copolymerisate unter unerwartet milden Bedingungen mit Erfolg durchgeführt werden kann. Die bei der Reinigung verbrauchte Wasserstoffmenge ist verschwindend gering. Ein weiterer Vorzug des erfindungsgemäßen Verfahrens ist der, daß die Copolymerisation von THF und Alkylenoxid nunmehr bei höherer Temperatur als sonst üblich durchgeführt werden kann. Die Verunreinigungen in den Roh-Copolymerisaten hängen nämlich unter anderem auch von der gewählten Polymerisationstemperatur ab. Je höher die Temperatur gewählt wird, desto höher ist die Konzentration an unerwünschten Verunreinigungen im Polymerisat. Eine höhere Polymerisationstemperatur bewirkt aber auch eine höhere Reaktionsgeschwindigkeit und die Verengung der Molekulargewichtsverteilung in den Copolymerisaten. Da es aber für die erfindungsgemäße Reinigung unerheblich ist, ob man ein mehr oder weniger verunreinigtes Polymerisat der hydrierenden Behandlung unterwirft, eröffnet das erfindungsgemäße Verfahren weitere vorteilhafte technische Möglichkeiten. Daß man besonders vorteilhafte Ergebnisse erhält, wenn man die zu hydrierenden Copolymerisate mit Sauerstoff vorbehandelt, war nicht zu erwarten, da Polytetrahydrofuran sowie Polytetrahydrofuran-Copolymere als sehr oxidationsempfindlich gelten. So wird z.B. in "Die makromolekulare Chemie" 81 (1965), Seiten 38 bis 50 der thermische Abbau von Polytetrahydrofuran bei verschiedenen Temperaturen beschrieben, der in Gegenwart von Luft-Sauerstoff sehr begünstigt wird.

Die in den Beispielen genannten Teile sind Gewichtsteile, sie verhalten sich zu Volumenteilen wie Kilogramm zu Liter.

Beispiel 1 (s. Abbildung)

Marktgängiges technisches THF wurde nach Beispiel 1 der EP-PS 3 112 gereinigt. Aus Bleicherde, die im Handel unter der Bezeichnung ®Tonsil Optimum FF der Süd-Chemie AG, München, erhältlich ist, wurden Strangpreßlinge mit einem Durchmesser von 2 bis 3 mm und einer durchschnittlichen Länge von 4 mm hergestellt und 4 Stunden bei 200 °C und 40 mbar getrocknet. Der Wassergehalt nach Fischer betrug danach 0,03 %.

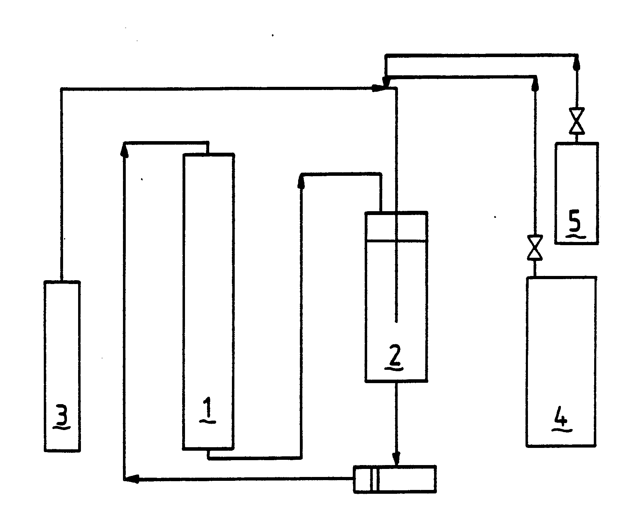

Die Polymerisation wurde in einer Apparatur durchgeführt, deren Prinzip in der Abbildung wiedergegeben ist. Die getrockneten Strangpreßlinge wurden in ein mit einem thermostatisierten Kühlmantel versehenes Reaktionsrohr (1) mit einem Inhalt von 5000 Volumenteilen und einem Verhältnis von Durchmesser zu Länge von ungefähr 1 : 10 eingefüllt. Das Vorratsgefäß (2) mit einem Nutzvolumen von 7000 Volumenteilen wurde mit 5000 Teilen des gereinigten Tetrahydrofurans, 43 Teilen Wasser und 20,3 Teilen Ethylenoxid beschickt. Dabei wurden Tetrahydrofuran (4), Wasser (5) und Ethylenoxid (3) den dafür vorgesehenen Vorratsbehältern entnommen. Diese Mischung der Ausgangsverbindungen wurde auf das Katalysatorbett (1), dessen Temperatur auf 47 bis 49 °C gehalten wurde, gegeben. Sobald das Katalysatorbett mit Frischzulauf gefüllt war, wurde im Vorratsgefäß noch einmal dieselbe Menge Frischzulauf hergestellt und diese nun fortlaufend über das Katalysatorbett geführt. Der Überlauf gelangte in das Vorratsgefäß (2) zurück. Durch kontinuierliches Eingasen von Ethylenoxid aus dem Vorratsgefäß (3) in die Zulaufmischung im Vorratsgefäß (2) wurde dafür gesorgt, daß die Ethylenoxid-Konzentration im Vorratsgefäß (2) konstant bei 0,4 Gew.% gehalten wurde. Durch die Eingasmenge von 35 Teilen Ethylenoxid in der Stunde gelang es, diese Konzentration in der Zulaufmischung aufrecht zu erhalten. Nach 9 Stunden Reaktionszeit waren 315 Teile Ethylenoxid in die Reaktionsmischung eingetragen. Man ließ das Reaktionsgemisch nun noch 4 Stunden bei Reaktionstemperatur nachreagieren. Dabei wurde das Reaktionsgemisch bei der Pumpenleistung von 12.000 Volumenteilen/h, die bei der gesamten Versuchsdauer konstant gehalten wurde, aus dem Vorratsgefäß (2) im Kreise über den Katalysator (1) geführt. Danach war die Ethylenoxid-Konzentration in der Zulaufmischung auf 0 Gew% abgesunken. Die insgesamt ein- und umgesetzte Ethylenoxid-Menge betrug 355,6 Teile.

Dem Vorratsgefäß (2) wurden durch Entleerung 5350 Teile Reaktionsmischung entnommen. Dieses erste Reaktionsgemisch wurde verworfen. Das Vorratsgefäß wurde anschließend erneut mit 5500 Teilen Frischzulauf beschickt, der aus 98,7 % Tetrahydrofuran, 0,9 % Wasser und 0,4 % Ethylenoxid bestand. Diese Mischung wurde nun mit einer Pumpenleistung von 12000 Volumenteilen pro Stunde durch das Katalysatorbett (1) im Kreis geführt. Gleichzeitig wurden in das Vorratsgefäß (2) 35 Teile Ethylenoxid stündlich eingegast, wodurch es gelang, die Konzentration an Ethylenoxid im Vorratsgefäß bei 0,4 % zu halten. Nach 9 Stunden wurde die Ethylenoxid-Zufuhr unterbrochen. Das Reaktionsgemisch wurde noch 4 Stunden mit einer stündlichen Leistung von 12000 Volumenteilen pro Stunde im Kreise gepumpt. Das Reaktionsprodukt im Vorratsgefäß (2) wurde abgelassen und das Vorratsgefäß in der oben beschriebenen Weise erneut mit der Mischung aus Tetrahydrofuran, Wasser und Ethylenoxid beschickt. Dann wurde die Polymerisation wie oben beschrieben 9 Stunden lang bei weiteren 4 Stunden für die Nachreaktion ausgeführt. Das dabei erhaltene Reaktionsgemisch unterschied sich kaum noch von den Austrägen, die in 100 weiteren Polymerisationsansätzen dieser Art erhalten wurden.

Die so erhaltenen rohe Copolymerisatlösung war farblos (Farbzahl < 5 APHA) und wies eine Säurezahl von 0,2 mg KOH/g auf. Sie hatte einen Gehalt an Polyoxibutylenpolyoxialkylenglykol (vom Molekulargewicht 1260) von etwa 45 Gew.% und einen THF-Gehalt von etwa 55 Gew.%. Sie enthielt 0,038 Gew.% nicht umgesetztes Ethylenoxid. Da das Ethylenoxid durch die übliche maßanalytische Bestimmungsmethode nicht genau feststellbar war, erfolgte die Konzentrationsbestimmung gaschromatographisch. Der Gehalt des Copolymerisates an einpolymerisiertem Ethylenoxid betrug 15 Gew.%.

In einem Hubrührautoklaven wurde die so erhaltene rohe Polyoxibutylenpolyoxialkylenglykol-Lösung bei 80°C und 150 bar Wasserstoff in Gegenwart von 3 Gew.% Raney-Nickel 10 Stunden hydriert. Nach der Hydrierung und Abtrennung des Katalysators durch Filtration wurde eine Roh-Polymerisat-Lösung mit der Farbzahl 5 APHA und der Säurezahl 0,2 mg KOH/g erhalten. Diese Säurezahl und Farbzahl wies auch das durch Vakuumdestillation von THF befreite Copolymere auf. Die Säurezahl wurde also durch eine nichtflüchtige Substanz verursacht.

Bei einer Verkürzung der Hydrierdauer auf die Hälfte wurde ein Copolymerisat mit einer Säurezahl von 0,04 erhalten. Die Säurezahl von 0 wurde bei der halbierten Reduktionszeit erhalten, wenn die rohe THF-haltige Lösung des Copolymerisates vor der Hydrierung bei 45°C mit 3 Volumenteilen Luft pro Kilogramm Copolymerisat behandelt wurde.

Aus dem nach diesem Beispiel hydrierend nachbehandelten Copolymerisat wurden auf bekannte Weise durch Umsetzung mit Diphenylmethan-pp'-diisocyanat (MDI) und dem Kettenverlängerer Butandiol-1,4 Gießelastomere hergestellt, wobei ein Molverhältnis Copolymerisat zu MDI zu Butandiol-1,4 von 1 : 1,85 : 0,77 eingehalten wurde. Die dabei erhaltenen Gießelastomere ergaben bei der Farbkennzeichnung im DIN-Farbensystem die Werte "Farbe DIN 1 : 2 : 1".

Beispiel 2 (Vergleichsbeispiel)

Die nach Beispiel 1 erhaltene Roh-Lösung des Copolymeren wude ohne hydrierende Nachbehandlung bei Normaldruck und im Vakuum bis 1 mbar bei 200°C im Filmverdampfer eingedampft. Das erhaltene Destillat bestand zu 98 % aus THF. Es enthielt ca. 2 Gew.% niedermolekulares Copolymerisat mit dem mittleren Molekulargewicht von 250 (kryoskopische bzw. dampfdruckosmometrische Bestimmung) und der Hydroxylzahl von 220 mg KOH/g. Da ein Glykol mit dem Molekulargewicht 250 eine theoretische Hydroxylzahl von 448,8 mg KOH/g besitzt, läßt sich ableiten, daß die abdestillierten Oligomeren etwa zu gleichen Teilenb aus cyclischen oligomeren Ethern und Glykolen zusammengesetzt sind. Durch Kapillargaschromatographie wurde nachgewiesen, daß in dem abdestillierten Tetrahydrofuran ca. 0,09 % Ethylenoxid, 0,06 % 1,4-Dioxan und 0,07 % 2-Methyldioxolan-1,3 enthalten waren. Dagegen wurde in dem abdestillierten Tetrahydrofuran aus dem nach Beispiel 1 hydrierten Roh-Austrag etwa 1,8 Gew.% niedermolekulares Copolymerisat mit dem mittleren Molekulargewicht 260 (kryoskopische bzw. dampfdruckosmometrische Bestimmung) und der Hydroxylzahl von 510 mg KOH/g gefunden. Der Gehalt an Dioxan und Dioxolan lag bei < 0,01 %. Ethylenoxid war nicht nachweisbar.

Aus dem nach diesem Beispiel erhaltenen Copolymerisat wurden, wie im letzten Absatz von Beispiel 1 beschrieben, Gießelastomere hergestellt, die tiefer gefärbt waren und bei der Farbkennzeichnung im DIN-Farbsystem die Werte "Farben DIN 1 : 5 : 1 ergaben.

Beispiel 3

Die nach Beispiel 1 erhaltene rohe THF-haltige Polyoxibutylenpolyoxialkylenglykol-Lösung wurde in kontinuierlicher Fahrweise der hydrierenden Behandlung unterworfen. Dazu wurden 700 Volumenteile eines Katalysators verwendet, der in der nicht aktivierten Form aus 24 Gew.% Nickeloxid, 8 Gew.% Kupferoxid und 68 Gew.% aus Siliciumdioxid bestand. Der Katalysator, der in Form zylinderförmiger Tabletten von 3 mm Höhe und 3 mm Durchmesser vorlag, wurde vor Verwendung durch übliche Behandlung mit Wasserstoff bei 200°C und 50 bar Wasserstoffdruck aktiviert. Der Katalysator befand sich in einem Schachtofen, dessen Länge sich zum Durchmesser wie 58 : 1 verhielt. Die Roh-Lösung des Copolymeren wurde in Sumpffahrweise bei 150°C und 250 bar Gesamtdruck der hydrierenden Behandlung unterworfen. Die mittlere Verweildauer der Polymerisatlösung am Katalysator betrug 4 Stunden. Das nach der Hydrierung durch Vakuumdestillation von THF befreite Copolymere hatte dieselben Eigenschaften wie das nach Beispiel 1 erhaltene Produkt solange die Verweildauer von 4 Stunden am Katalysator nicht unterschritten wurde.

Ähnliche Ergebnisse wurden erhalten, wenn als Katalysator (a) ein Kupfer/Kobalt-Katalysator eingesetzt wurde, der nach Beispiel 21 der DE-OS 2 726 710 hergestellt wurde und etwa die Zusammensetzung CuO·1/2 Co$_2$O$_3$·2 SiO$_2$ aufwies oder wenn (b) ein Katalysator verwendet wurde, der 0,5 Gew.% Palladium auf 3 mm-Kieselgelsträngen enthielt und die hydrierende Behandlung bei 110°C und 100 bar Wasserstoffdruck durchgeführt wurde.

Beispiel 4

Die rohe THF-haltige Lösung des Copolymerisates aus Beispiel 1 wurde vor der Hydrierung bei 45°C mit 5 Volumenteilen Luft pro kg Copolymerisat behandelt. Dazu wurde die Luft unter kräftigem Rühren unter die Oberfläche der Polymerisatlösung eingegast. Die so vorbehandelte Lösung wurde wie in Beispiel 3 beschrieben an dem Kupfer/Nickelkatalysator auf Kieselgel der hydrierenden Reinigung bei 150°C und 250 bar unterworfen. Eine vollständige Reinigung wurde nun bereits bei einer mittleren Verweildauer am Katalysator von nur 1 Stunde erzielt.

## Ansprüche

1. Verfahren zur Reinigung von Polyoxibutylenpolyoxialkylenglykolen, die durch Copolymerisation von Tetrahydrofuran mit einem 1,2-Alkylenoxid erhalten wurden, dadurch gekennzeichnet, daß man die Polyoxibutylenpolyoxialkylenglykole bei Temperaturen bis 250°C katalytisch hydriert.

2. Verfahren nach Anspruch 1, dadurch gekennzeichnet, daß man als Polyoxibutylenpolyoxialkylenglykol eine durch Copolymerisation von Tetrahydrofuran mit einem 1,2-Alkylenoxid an einem kationischen Katalysator erhaltene rohe Lösung, die 40 bis 75 Gew.% Tetrahydrofuran und 25 bis 60 Gew.% Polyoxibutylenpolyoxialkylenglykol enthält, katalytisch hydriert.

3. Verfahren nach Anspruch 1, dadurch gekennzeichnet, daß man für die katalytische Hydrierung eine rohe Lösung heranzieht, die 45 bis 70 Gew.% Tetrahydrofuran und 30 bis 55 Gew.% Polyoxibutylenpolyoxialkylenglykol enthält, welche man durch diskontinuierliche Copolymerisation von Tetrahydrofuran mit Ethylenoxid an einem Bleicherde- oder Zeolith-Katalysator erhalten hat, wobei das Ethylenoxid dem Reaktionsgemisch so zugeleitet wurde, daß die Konzentration des Ethylenoxids im Reaktionsgemisch während der Polymerisation 2 Gew.% nicht überschritten hat.

4. Verfahren nach Anspruch 1, dadurch gekennzeichnet, daß man bei Temperaturen von 50 bis 250°C und Drücken zwischen 10 und 100 bar hydriert.

5. Verfahren nach Anspruch 1, dadurch gekennzeichnet, daß man für die Hydrierung Katalysatoren verwendet, die Nickel, Cobalt, Eisen, Ruthenium, Palladium, Platin oder Kupfer enthalten.

6. Verfahren nach Anspruch 1, dadurch gekennzeichnet, daß man die Polyoxibutylenpolyoxialkylenglykole vor der Hydrierung bei Temperaturen von 20 bis 150°C mit 0,2 bis 5 Gewichtsteilen Sauerstoff pro 1000 Gewichtsteile Polyoxibutylenpolyoxialkylenglykol behandelt.